# FASCICULE DE BREVET EUROPEEN

(11) **EP 2 980 939 B1**
(45) Date de publication et mention de la délivrance du brevet: **26.04.2017**
(21) Numéro de dépôt: 15175801.8
(22) Date de dépôt: 08.07.2015
(51) Int. Cl.: H02G 3/08, H02G 3/14

(54) **DISPOSITIF D ADJONCTION POUR UNE PRISE**
ZUSATZVORRICHTUNG FÜR STECKDOSE
DEVICE FOR ADDITION TO A SOCKET

(30) Priorité: 31.07.2014 FR 1457410
(43) Date de publication de la demande: 03.02.2016
(73) Titulaire: Omelcom, 01500 Chateau-Gaillard (FR)
(72) Inventeur: Pin, Jean-Patrick, 01330 Villars les Dombes (FR); Babiarz, Romuald, 01120 Montluel (FR)
(74) Mandataire: Verriest, Philippe

(56) Documents cités:
- EP-A1- 2 105 770
- FR-A1- 2 959 881
- US-A- 4 874 904

## Description

La présente invention concerne un dispositif d'adjonction pour une prise de communication ou d'alimentation.

Il est connu de disposer d'une installation du bâtiment destinée à répartir des câbles de communication dans une pluralité de pièces. Chacune de ces pièces peut disposer d'un terminal de raccordement au câble de communication, tel qu'un boitier optique. Le document US 4874904 décrit un dispositif d'adjonction pour une prise de communication ou d'alimentation, comprenant un corps organisé autour d'une zone de passage s'étendant selon un axe de passage et un système d'assemblage à la prise pourvu d'un organe de fixation à la paroi murale et d'un organe de fixation au support de la prise. Le câble de communication dédié au raccordement est habituellement disposé de manière apparente dans la pièce ou les pièces entre son point d'arrivée dans le bâtiment à son point de connexion au boitier optique. Selon un exemple, le câble optique est disposé le long de plinthes ou contre un mur.

Ce câble apparent peut engendrer des problèmes d'esthétisme dans la pièce mais également engendrer des risques de dégradation du câble.

Une solution peut consister à prévoir des conduits ou des gaines spécifiques au guidage des câbles de communication, ceux-ci pouvant être disposés dans ou contre les murs de la pièce.

Toutefois cette solution s'avère couteuse tant en matériel et travaux, par exemple pour la mise en place du câble optique dans un bâtiment existant, qu'en conception, par exemple dans le cas d'un bâtiment neuf.

La présente invention vise à résoudre tout ou partie des inconvénients mentionnés ci-dessus.

A cet effet, la présente invention concerne un dispositif d'adjonction pour une prise de communication ou d'alimentation, ladite prise étant ménagée dans une paroi murale ou une embouchure destinée à être raccordée à ladite prise, ladite prise comprenant un support et un système de fixation amovible du support sur la paroi murale ou l'embouchure, le dispositif d'adjonction comprenant :
- un corps organisé autour d'une zone de passage s'étendant selon un axe de passage, le corps présentant un contour interne définissant la zone de passage et un contour externe définissant l'étendue spatiale du corps,
- une entrée d'insertion pour un câble, tel qu'un câble de communication ou un câble d'alimentation électrique,
- une sortie, telle q'une sortie de communication ou une sortie d'alimentation électrique, pourvue d'un élément de raccordement audit câble, la sortie étant ménagée dans ou rapportée sur le contour externe du corps,
- un système d'assemblage à la prise pourvu d'un organe de fixation amovible à la paroi murale ou l'embouchure et d'un organe de fixation amovible au support, le dispositif d'adjonction étant agencé pour être disposé, en une position assemblée du système d'assemblage, entre la paroi murale et le support ou l'embouchure et le support selon l'axe de passage.

La prise de communication ou d'alimentation peut notamment être une prise disposée à même la paroi murale, une prise fixée sur une embouchure dédiée, par exemple une prise encastrable communément utilisée dans les bâtiments.

Ainsi, selon un aspect de l'invention, l'embouchure destinée à être raccordée à ladite prise est une boite d'encastrement ménagée dans une paroi murale et présentant une ouverture traversant ladite paroi murale. Par exemple, il peut s'agir d'une prise téléphonique, d'une prise électrique ou d'une prise coaxiale.

Selon un aspect de l'invention, le dispositif d'adjonction présente une épaisseur selon l'axe de passage de manière à ménager une distance selon l'axe de passage entre la paroi murale et le support ou entre l'embouchure et le support, en position assemblée.

La prise coopérant avec le système d'assemblage est ainsi plus épaisse selon l'axe de passage, cependant l'aspect visuel de la prise n'est que très peu modifié, le support restant la partie visible pour un observateur face au mur.

De préférence, en position assemblée, la zone de passage est en regard de l'ouverture traversant la paroi murale et en regard du support.

Le dispositif d'adjonction une fois installé présente un faible encombrement et se situe sur la même surface du mur que la prise avant installation ou sur l'embouchure, ce qui limite l'aspect inesthétique et l'encombrement de cette installation additionnelle.

De préférence, l'ouverture traversant la paroi murale est attenante à une gaine ou un conduit. La gaine ou le conduit est disposé du côté opposé de la paroi murale par rapport au support de la prise.

Selon un exemple, il s'agit d'une gaine interne à un mur destinée à recevoir un câble téléphonique. Le câble téléphonique est relié à un raccord téléphonique ménagé dans le support et débouchant vers l'extérieur. Ce raccord est agencé pour être connecté à un raccord téléphonique complémentaire.

Selon un aspect de l'invention, le corps s'étend selon un plan transversal à l'axe de passage et présente une épaisseur selon l'axe de passage, l'épaisseur étant moindre par rapport à l'étendue du corps selon le plan transversal.

En comparaison par rapport à une prise montée sans dispositif d'adjonction, le support est décalé en position assemblée de l'épaisseur du corps. L'agencement du câble téléphonique n'est pas perturbé car ledit câble est généralement disposé de manière lâche dans la gaine et peut s'étendre de la longeur correspondant à l'épaisseur du dispositif d'adjonction.

Selon un aspect de l'invention, l'entrée d'insertion est ménagée dans le contour externe du corps. Ceci permet d'insérer un câble externe dans le dispositif d'adjonction.

Selon un aspect de l'invention, l'entrée d'insertion est ménagée dans le contour interne du corps.

Ainsi le câble peut être disposé à l'intérieur de la gaine.

En continuant avec l'exemple du câble optique, il apparait que le dispositif d'adjonction permet de disposer d'une prise optique en utilisant la gaine destinée au câble téléphonique et à la prise téléphonique.

L'installation d'un dispositif d'adjonction est ainsi rapide par rapport à l'installation d'une gaine dédiée dans le mur et à la fixation d'une prise optique sur le mur.

Selon un aspect de l'invention, la sortie, par exemple une sortie optique est agencée pour être, par l'intermédiaire d'un câble dédié, connectée à un boitier, tel qu'un boitier optique.

Selon un aspect de l'invention, le corps, en une configuration de mise en place, présente une fente de passage entre le contour interne et le contour externe, ladite fente étant en outre traversante selon l'axe de passage.

La fente de passage permet l'insertion et le retrait du corps en une position intermédiaire entre le support de la prise et la boite d'encastrement sans avoir à débrancher les câbles de la prise connectés au support. Ainsi la fente est agencée pour l'insertion desdits câbles dans la zone de passage.

En pratique il suffit de décaler le support de la prise de communication d'une épaisseur à peine supérieure à celle du corps du dispositif d'adjonction pour son insertion. Ce décalage ne pose pas de difficulté car les câbles de la prise de communication sont en général disposée de manière lâche.

En évitant ainsi de débrancher les câbles de la prise, le technicien ne court aucun risque. Cette disposition est intéressante dans le cas où le dispositif d'adjonction est inséré dans une prise électrique.

Selon un aspect de l'invention, la fente de passage est engendrée par le déplacement d'une portion du corps. De préférence, la fente de passage est engendrée par une rotation de la portion du corps autour d'un axe ménagé dans le corps ou par le retrait de ladite portion du corps de l'emplacement de la fente.

Selon un autre aspect de l'invention, le corps comprend plusieurs parties, chacune étant agencée pour être disposée en une configuration de mise en place et chacune présentant une fente de passage.

De préférence, une première partie du corps comprend une portion apte à être retirée pour engendrer une fente, ladite portion étant rapportée sur une deuxième partie du corps. La fente est ainsi engendrée par la désolidarisation de la première partie et de la deuxième partie du corps.

Selon un aspect de l'invention, le corps présente une cavité de protection pour le câble entre l'entrée d'insertion et l'élément de raccordement de la sortie.

Il s'agit ainsi d'un cloisonnement du dispositif d'adjonction par rapport à la prise de communication ou d'alimentation. Selon l'exemple présenté, une intervention sur la prise téléphonique ne risquera pas d'endommager le câble optique disposé dans la cavité du dispositif d'adjonction.

Selon un aspect de l'invention, le corps comprend un organe de guidage pour le câble et/ou pour un ou plusieurs éléments unitaires du câble tel qu'un fil.

Selon un aspect de l'invention, l'organe de guidage comprend au moins une nervure pourvue de portions s'étendant de manière rectiligne ou courbe. La ou les nervures permettent ainsi de disposer le câble ou les éléments unitaires du câble à l'intérieur de la cavité.

Ainsi, selon l'exemple du câble optique, le rayon de courbure est défini par la disposition de la ou des nervures. Il pourra par exemple être toujours supérieur à une valeur limite pour ne pas riquer d'endommager la fibre optique.

Selon un aspect de l'invention, l'organe de guidage comprend au moins un élément de maintien du câble, d'un ou de plusieurs éléments unitaires du câble dans une section de passage. De préférence ladite section de passage est attenante à une portion de nervure. La section de passage définit une tolérance sur le positionnement dans la cavité du câble, d'un ou de plusieurs éléments unitaires.

Selon un aspect de l'invention, l'élément de maintien présente une échancrure agencée pour l'introduction du câble, d'un ou de plusieurs éléments unitaires dans la section de passage.

Selon un aspect de l'inventin, le corps comprend une entretoise de fixation sur laquelle est rapporté le système d'assemblage et une enveloppe de protection dans laquelle est ménagée la cavité.

Le corps comprenant deux parties distinctes, il est possible d'installer en premier lieu l'entretoise de fixation grâce à l'organe de fixation amovible à la paroi murale ou à l'embouchure. L'enveloppe de protection et donc la cavité dans laquelle est disposée le câble de communication est donc à distance lors de la mise en place de l'organe de fixation amovible à la paroi murale ou à l'embouchure.

Cette disposition permet ainsi de protéger le câble lors de l'installation de l'entretoise.

Selon un aspect de l'invention, l'enveloppe de protection est agencée pour être solidarisé à l'entretoise de fixation.

Selon une première possibilité, un système de solidarisation amovible, tel qu'un système d'encliquetage permet de solidariser l'enveloppe de protection à l'entretoise de fixation.

Selon une seconde possiblité, l'organe de fixation amovible du support de la prise est agencé pour maintenir en position l'enveloppe de protection sur l'entretoise de fixation en position assemblée.

Il est ainsi possible de passer d'une position démontée à la position assemblée en plusieurs étapes. Tout d'abord, l'entretoise de fixation est solidarisée à la la paroi murale ou l'embouchure. L'enveloppe de protection comprenant le câble est disposée sur l'entretoise de fixation. Enfin le support de la prise est disposé sur le corps du dispositif d'adjontion et l'organe de fixation amovible du support est mis en place.

Il apparait également que les opérations de maintenance ne nécessitent pas un démontage total du dispositif d'adjonction. On peut ainsi, par exemple, remplacer le câble de communication tout en laissant l'entretoise de fixation montée sur la paroi murale ou l'embouchure.

Selon un aspect de l'invention, le dispositif d'adjonction comprend un élément d'ancrage pour le câble.

L'élément d'ancrage du dispositif d'adjonction permet de maintenir en position le câble après son introduction dans le corps par l'entrée d'insertion.

Selon une première possibilité, l'élément d'ancrage est ménagé dans une portion du contour interne. Selon une seconde possibilité, l'élément d'ancrage est disposé dans la cavité. Selon une troisième possibilité, l'élément d'ancrage est partiellement ménagé dans une portion du contour interne et partiellement disposé dans le cavité, au niveau de l'entrée d'insertion.

Selon un aspect de l'invention, l'élément d'ancrage comprend deux parties disposées de manière à engendrer un étranglement de maintien en position du câble de communication.

Selon un autre aspect de l'invention, l'élément d'ancrage comprend en outre un élément de séparation agencé pour guider des éléments unitaires du câble au niveau de la séparation du câble en une pluralité d'éléments unitaires.

Dans le cas d'un câble optique, l'élement de séparation a le rôle de guide au niveau de la séparation du câble optique en une multitude de fibres optiques. De préférence l'élément de séparation est agencé pour que le rayon de courbure du ou des éléments unitaires soit au dessus d'une certaine valeur, ceci ayant pour but de ne pas endommager la ou les fibres optiques.

Selon un aspect de l'invention, l'organe de fixation amovible à la paroi murale ou l'embouchure correspond à une première partie du système de fixation amovible de la prise ménagée dans le support et/ou dans lequel l'organe de fixation amovible au support correspond à une deuxième partie du système de fixation amovible de la prise ménagée dans la paroi murale ou l'embouchure.

Il apparait ainsi que le dispositif d'adjonction présente une fixation similaire à celle de la prise existante. Cette disposition permet d'intégrer le système d'adjonction sans modification préalable de la prise. De plus il est possible de monter plusieurs dispositifs d'adjonction sur une même prise.

Selon un aspect de l'invention, la sortie est ménagée dans une portion de paroi externe du dispositif d'adjonction s'étendant sensiblement parallèlement à l'axe de passage.

Ainsi la sortie est ménagée dans l'épaisseur du dispositif d'adjonction et est facilement accessible à un utilisateur puisqu'elle permet un branchement transversalement à l'axe de passage.

Selon un aspect de l'invention, le contour externe correspond à une paroi externe du dispositif d'adjonction s'étendant sensiblement parallèlement à l'axe de passage.

Ainsi le contour externe définit l'emcombrement et l'épaisseur du dispositif d'adjonction. Cette disposition permet d'obtenir une continuité entre le support de la prise et le dispositif d'adjonction. L'aspect de la prise et du dispositif d'adjonction laisse penser que ces derniers ne constituent qu'une seule et même unité alors que le dispositf d'adjonction peut avoir été ajouté après.

Selon un aspect de l'invention, l'organe de fixation amovible à la paroi murale ou l'embouchure est agencé pour disposer, de manière alternative, le corps en une pluralité d'orientations par rapport à la paroi mobile ou l'embouchure en position assemblée.

Ainsi il est possible de faire pivoter le dispositif d'adjonction selon l'axe de passage par rapport à la boite d'encasterment. Cette pluralité d'orientations a pour but de disposer la sortie de communication à l'endroit le mieux adapté pour son raccordement. De préférence, l'organe de fixation amovible à la paroi murale ou à l'embouchure est en outre agencé pour la fixation de l'élément d'adjonction sur un support externe, tel qu'un mur.

Selon un aspect de l'invention, le dispositif d'adjonction comprend en outre un élément de fixation additionnel agencé pour fixer le dispositif d'adjonction sur un support externe, tel qu'un mur. Par exemple il peut s'agir d'un adhésif double face à disposer sur le dispositif d'adjonction.

Selon un aspect de l'invention, l'organe de fixation amovible à la paroi ou à l'embouchure présente des points de fixation ménagés dans le corps du dispositif d'adjonction. L'organe de fixation amovible à la paroi murale ou à l'embouchure comprend en outre des éléments de solidarisation amovibles, tels que des vis.

De préférence les points de fixations sont répartis de manière régulière, ce qui permet une rotation du corps par rapport à la la paroi murale ou à l'embouchure autour de l'axe de passage. En particulier, on dispose de quatre points de fixation permettant des rotations de 90°.

Selon un aspect de l'invention, le contour externe du corps présente une zone d'identification.

La zone d'identification permet un marquage du dispositif d'adjonction, par exemple en inscrivant une référence.

Selon un aspect de l'invention ; le dispositif d'adjonction comprend en outre un support de fermeture agencé pour être solidarisé au corps. Selon une première possibilité, un système d'encliquetage est agencé pour solidariser le support de fermeture au corps. Selon une deuxième possibilité, le support de fermeture est agencé pour être solidarisé au corps par l'organe de fixation amovible au support.

Le support de fermeture peut être assemblé au corps lorsque la prise de communication ou d'alimentation n'est pas utilisée. Dans ce cas, seules une paroi murale ou une embouchure sont disponibles.

Cette disposition est intéressante pour profiter d'anciennes prises qui ne sont plus utilisées. Le support de la prise non utilisée peut ainsi être retiré et remplacé par le support de fermeture.

Le support de fermeture a un rôle esthétique et offre également une protection supplémenaire au corps. Selon un aspect de l'invention, le support de fermeture présente une zone d'identification.

Selon un aspect de l'invention, le support de fermeture présente une zone d'identification. De préférence, cette zone d'identification est identique à la zone d'identification du corps.

En particulier, une étiquette peut être disposée sur la zone d'identification, chaque zone d'identification étant adapté à l'insertion d'étiquette de même taille.

La présente invention concerne également une prise combinée comprenant un dispositif d'adjonction tel que décrit précédemment et une prise de communication ou d'alimentation, ladite prise étant ménagée dans une paroi murale ou une embouchure destinée à être raccordée à ladite prise de communication, ladite prise de communication comprenant un support et un système de fixation amovible du support sur la paroi murale ou l'embouchure ; le dispositif d'adjonction étant agencé pour être disposé, en une position assemblée, entre la paroi murale et le support ou entre l'embouchure et le support de la prise.

Selon un aspect de l'invention, le support et/ou l'embouchure présentent un profil extérieur selon le plan transversal à l'axe de passage, le dispositif d'adjonction présentant un profil extérieur identique ou compris dans le profil extérieur du support et/ou l'embouchure.

Cette disposition permet limiter l'impact visuel de l'ajout du dispositif d'adjonction à une prise existante. Cette limite de l'étendue du dispositif d'adjonction réduit également les contraintes spatiales dues à l'ajout du dispositif d'adjonction. Cela peut être utile si la prise existante est située dans un environnement encombré.

De toute façon l'invention sera bien comprise à l'aide de la description qui suit en référence aux dessins schématiques annexés représentant, à titre d'exemple non limitatif, une forme d'exécution de ce dispositif d'adjonction.
Figure 1 est une vue en perspective d'une prise combinée comprenant une prise de communication et un dispositif d'adjonction, selon un premier mode de réalisation.
Figure 2 est une vue éclatée de la prise combinée selon le premier mode de réalisation.
Figures 3 et 4 sont des vues en perspective d'une enveloppe de protection du dispositif d'adjonction, selon le premier mode de réalisation.
Figure 5 est une vue en perspective d'une entretoise de fixation du dispositif d'adjonction, selon le premier mode de réalisation.
Figure 6 et 7 sont des vues en perspective du corps du dispositif d'adjonction, selon le premier mode de réalisation.
Figures 8 et 9 sont des vues en perspective du corps du dispositif d'adjonction, selon un deuxième mode de réalisation.
Figures 10 et 11 sont des vues en perspective de l'entretoise de fixation, selon le deuxième mode de réalisation.
Figures 12 et 13 sont des vues en perspective de l'enveloppe de protection, selon le deuxième mode de réalisation.
Figure 14 est une vue éclatée d'une prise combinée selon le deuxième mode de réalisation.
Figures 15 et 16 sont des vues en perspective du dispositif d'adjonction comprenant un support de fermeture selon un troisième mode de réalisation.

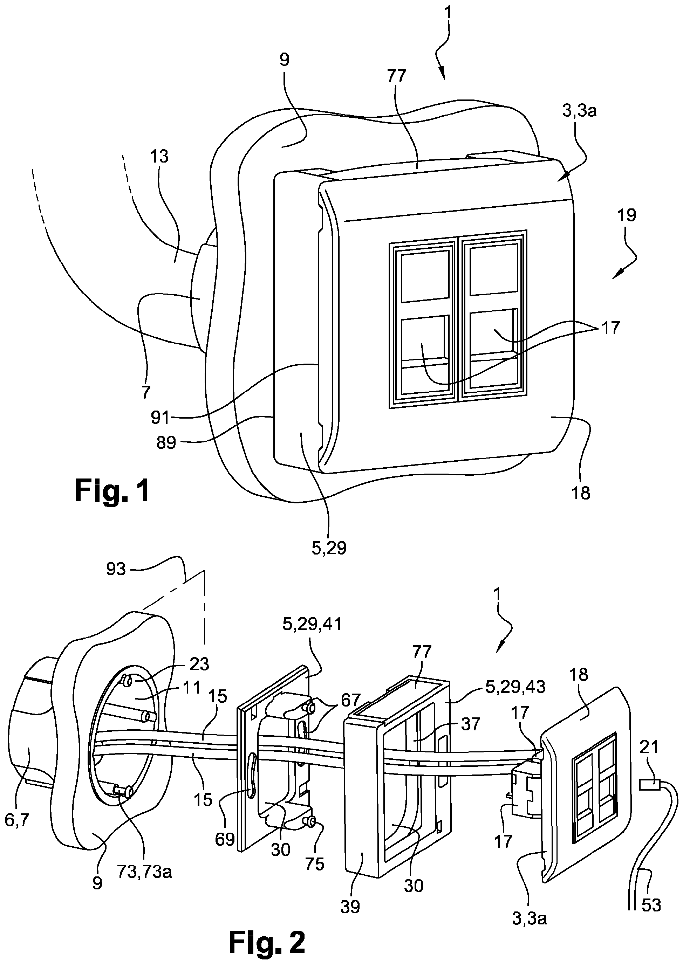

Comme illustré aux figures 1 et 2, et selon un premier mode de réalisation, une prise combinée 1 comprend une prise de communication 3, par exemple une prise téléphonique 3a, et un dispositif d'adjonction 5.

La prise de communication 3 comprend une embouchure 6. Selon le premier mode de réalisation, il s'agit d'une boite d'encastrement 7 ménagée dans une paroi murale 9. La boite d'encastrement 7 présente une ouverture 11 traversant la paroi murale 9 et étant en regard d'une gaine 13 ou conduit intérieur à la paroi mural 9.

Il s'agit d'une gaine 13 interne à un mur destinée à recevoir un ou plusieurs câbles téléphoniques 15. Le câble téléphonique 15 est relié à un raccord téléphonique 17 ménagé dans un support 18 de la prise de communication 3 et débouchant vers l'extérieur 19. Ce raccord 17 est agencé pour être connecté à un raccord téléphonique complémentaire 21 avec un câble téléphonique 53.

La prise de communication 3 comprend un système de fixation 23 amovible du support 18 sur la boite d'encastrement 7, le support 18 étant en regard de l'ouverture 11 de la boite d'encastrement 7 lorsque le support 18 est fixé directement sur la boite d'encastrement 7.

Le système de fixation 23 comprend ainsi une première partie ménagée dans le support 18 de la prise 3 et une deuxième partie ménagée dans la boite d'encastrement 7, la première partie étant agencée pour coopérer avec la deuxième partie.

Le support 18 est raccordé directement à la boite d'encastrement 7 en l'absence de dispositif d'adjonction 5. Cette configuration correspond par exemple à une prise de communication 3 existante d'une pièce d'un bâtiment.

Le dispositif d'adjonction 5 est agencé pour être inséré entre la boite d'encastrement 7 et le support 18 de la prise de communication 3.

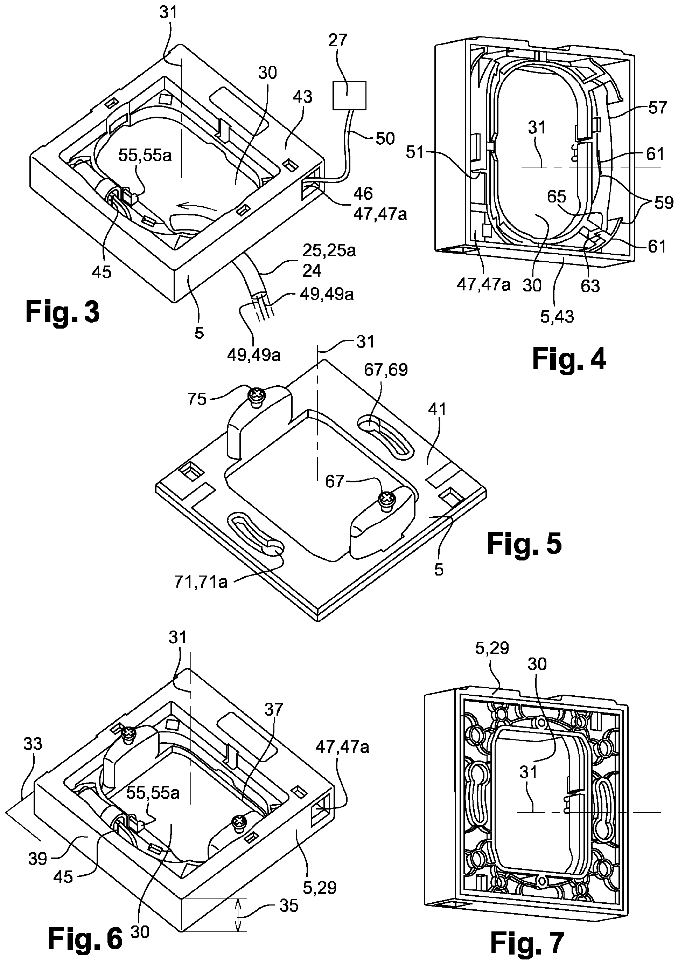

Comme illustré aux figures 2 à 7 et selon le premier mode de réalisation, Le dispositif d'adjonction 5 est agencé pour permettre le raccordement d'un câble 24. Il s'agit dans ce mode de réalisation d'un câble de communication 25, tel qu'un câble optique 25a à un boitier optique 27.

Le dispositif d'adjonction 5 comprend un corps 29 organisé autour d'une zone de passage 30 s'étendant selon un axe de passage 31.

Le corps 29 s'étend selon un plan transversal 33 à l'axe de passage 31 et présente une épaisseur 35 selon l'axe de passage 31, l'épaisseur 35 étant inférieure à l'étendue transversale du corps 29.

Le corps 29 présente un contour interne 37 définissant la zone de passage 30 et un contour externe 39 définissant l'étendue spatiale du corps 29. Le corps 29 comprend une entretoise de fixation 41 et une enveloppe de protection 43.

La zone de passage 30 permet le passage des câbles téléphoniques 25, comme illustré à la figure 2. Pour l'insertion des câbles téléphoniques 15 dans la zone de passage 30, il est possible de désolidariser les câbles téléphoniques 15 de leurs raccords téléphoniques 17.

Le dispositif d'adjonction 5 présente une entrée d'insertion 45 ménagée dans le contour interne 37 et une sortie 46. Dans le mode de réalisation présenté, il s'agit d'une sortie de communication 47, telle qu'une sortie optique 47a ménagée dans le contour externe 39. Le contour externe 39 correspond à une surface externe du dispositif d'adjonction 5 s'étendant selon l'axe de passage 31. Cette extension selon l'axe de passage 31 définit l'épaisseur du dispositif.

L'entrée d'insertion 45 est ainsi agencée pour recevoir un câble de communication 25 et la sortie 47 est agencée pour être connectée à au moins un élément unitaire 49 du câble de communication 25 tel qu'une fibre optique 49a lorsque le câble de communication 25 est un câble optique 25a. Pour ce faire la sortie 47 comprend un élément de raccordement 51 à un élément unitaire 49.

La sortie 47 est en outre agencée pour être, par l'intermédiaire d'un un cordon 50 connectée au boitier optique 27.

Le dispositif d'adjonction 5 comprend en outre un élément d'ancrage 55 pour le câble de communication 25 ménagé dans le contour interne 37. L'élément d'ancrage 55 comprend deux parties agencées pour engendrer un étranglement de maintien en position du câble de communication 25.

L'élément d'ancrage 55 comprend en outre un élément de séparation 55a destiné à servir de guide pour un ou plusieurs éléments unitaires 49 du câble de communication 25. L'endroit du câble de communication 25 de séparation en plusieurs éléments unitaires 49 peut donc être disposé sur l'élément de séparation 55a. Les éléments unitaires 49 sont ainsi maintenus en position et protégées.

Le dispositif d'adjonction 5 présente en outre une cavité de protection 57 du câble de communication 25 et/ou de ses éléments unitaires 49 ménagée dans l'enveloppe de protection 43.

Le dispositif d'adjonction 5 comprend un organe de guidage 59 interne au corps 29 destiné à maintenir en position le câble de communication 25 et/ou de ses éléments unitaires 49 à l'intérieur du corps 29.

L'organe de guidage 59 comprend des nervures 61 ménagées dans la cavité de protection 57. L'organe de guidage 59 comprend également au ou plusieurs éléments de maintien 63 dans une section de passage du câble de communication 25 et/ou de ses éléments unitaires 49. Les éléments de maintien 63 sont disposés le long des nervures 61 et une échancrure 65 est ménagée au niveau de chaque élément de maintien 63 pour introduction dans la section de passage du câble de communication 25 ou d'un élément unitaire 49.

Le dispositif d'adjonction 5 comprend un système d'assemblage 67 à la prise de communication 3. A la figure 1, est représenté le dispositif d'adjonction 5 en une position assemblée à la prise de communication 3, le maintien en position du dispositif d'adjonction 5 sur la paroi murale 9 et du support 18 de la prise de communication 3 sur le dispositif d'adjonction 5 étant réalisé par le système d'assemblage 67.

Le système d'assemblage 67 comprend un organe de fixation amovible 69 à la boite d'encastrement 7 ménagé dans l'entretoise de fixation41.

L'organe de fixation amovible 69 à la boite d'encastrement 7 présente des points de fixation 71 ménagés corps 29 du dispositif d'adjonction 5: des rainures 71 a. L'organe de fixation amovible 69 à la boite d'encastrement 7 comprend en outre des éléments de solidarisation amobibles 73, tels que des vis 73a.

L'organe de fixation amovible 69 peut également être utilisé pour fixer le dispositif d'adjonction 5 directement à une paroi murale 9. Ainsi le dispositif d'adjonction peut être fixé à un mur en l'absence de boite d'encastrement 7.

De même le dispositif d'adjonction peut comprendre un élément de fixation additionnel pour être fixé sur un mur, par exemple une bande adhésive.

Le système d'assemblage 67 comprend également un organe de fixation amovible 75 au support 18 comprenant également des vis à insérer dans des rainures ménagées dans le support 18 de la prise de communication 3.

Il est à remarquer que les organes de fixation amovibles 69, 75 à la boite d'encastrement 7 et au support 18 de la prise de communication 3 sont similaires. Ceci explique la possibilité d'insertion du dispositif d'adjonction 5 entre la boite d'encastrement 7 et le support 18 de la prise de communication 3.

Chaque point de fixation 71 à la boite d'encastrement 7 est similaire et tous sont disposés de manière régulière comme illustré à la figure 2. Ainsi l'entretoise de fixation 41 peut être fixée de manière alternative selon plusieurs orientations.

Il apparait qu'il est possible de disposer l'entretoise de fixation 41 selon quatre orientations en procédant à des rotations de 90° de l'entretoise de fixation 41 par rapport à la boite d'encastrement 7 par rapport à l'axe de passage 31. Cette disposition permet d'orienter la sortie 47 du dispositif d'adjonction 5 dans la position qui convient le mieux.

L'enveloppe de protection 43 comprend en outre une zone d'identification 77 pour réaliser un marquage du dispositif d'adjonction 5, par exemple en inscrivant une référence.

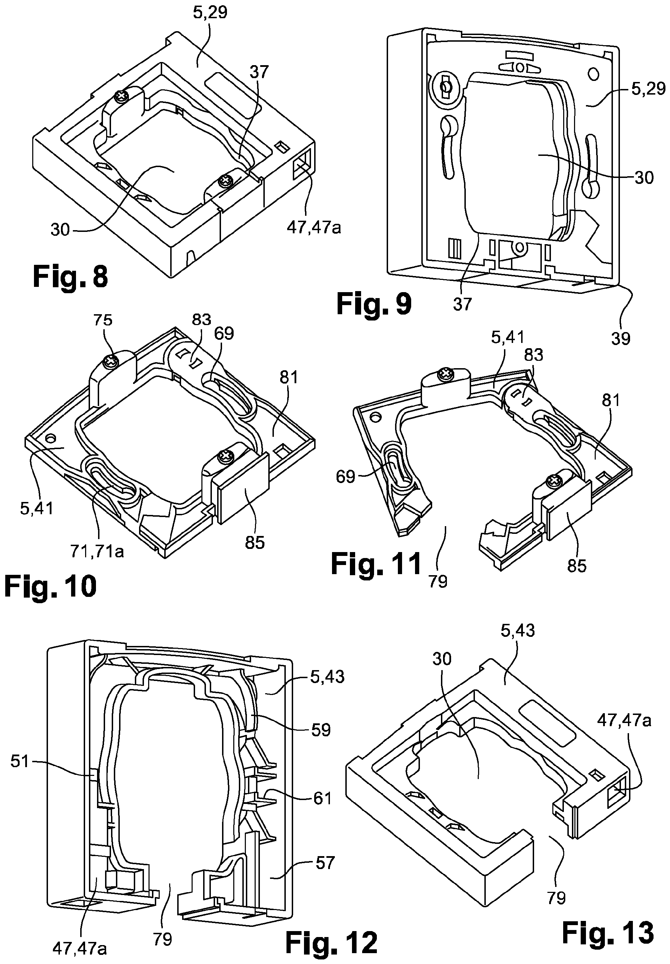

Comme illustré aux figures 8 à 14 et selon un deuxième mode de réalisation, le corps 29 présente, en une configuration de mise en place, des fentes de passage 79 destinées au passage du câble téléphonique 15. Ces fentes de passages 79 permettent une installation simplifiée du dispositif d'adjonction 5 : il n'est pas nécessaire de déconnecter le câble téléphonique 15 du raccord téléphonique 17 du support 18 pour insérer le dispositif d'adjonction 5.

Comme illustré aux figures 10 et 11, l'entretoise de fixation 41 comprend une portion rotative 81 autour d'un axe 83 et l'enveloppe de protection 43 comprend une portion 85 rapportée sur l'entretoise de fixation 41 agencée pour engendrer une fente 79 lors de la désolidarisation de l'enveloppe de protection 43 et de l'entretoise de fixation 41.

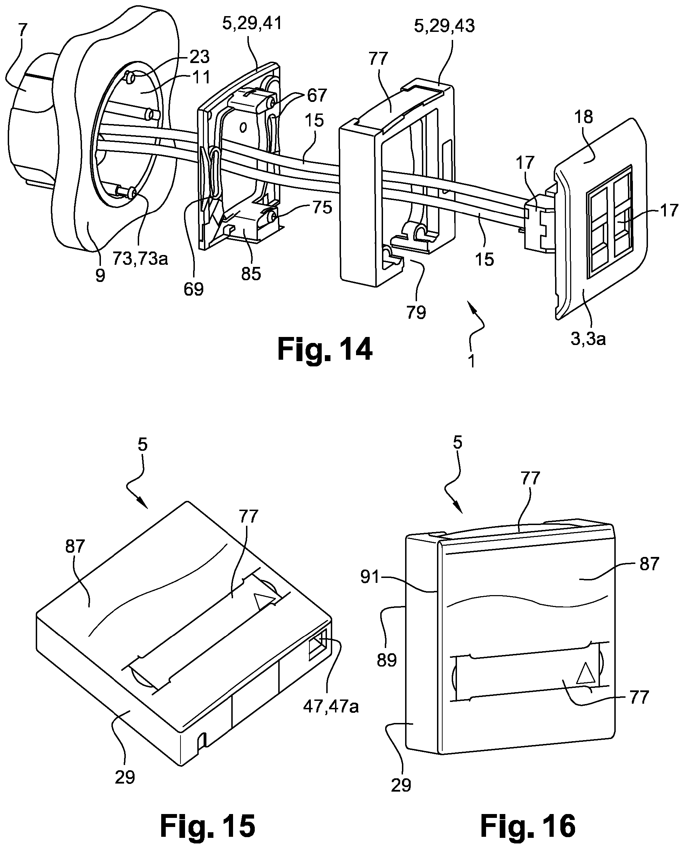

Comme illustré aux figures 15 et 16 et selon un troisième mode de réalisation, un dispositif d'adjonction 5 peut être monté sur des prises inutilisées pour peu qu'une boite d'encastrement 7 soit ménagée dans la paroi murale 9 et que le mur comprenne une gaine 13 interne.

Dans ce cas, le dispositif d'adjonction 5 comprend en outre un support de fermeture 87 dont la géométrie est similaire à celle d'un support 18 de prise de communication 3. Le dispositif d'adjonction 5 peut être identique à celui du premier ou du second mode de réalisation.

Il apparait ainsi que l'organe de fixation amovible 75 est adapté pour être solidarisé au support de fermeture 87 de la même manière qu'au support 18 d'une prise de communication 3. Le support de fermeture 87 a un rôle esthétique en masquant la zone de passage 30 et l'intérieur de la boite d'encastrement 7 et également un rôle de protection.

Le support de fermeture 87 comprend une zone d'identification 77 pour réaliser un marquage du dispositif d'adjonction, par exemple en inscrivant une référence.

Il est à remarquer que, dans les trois modes de réalisation présentés, le profil 89 du dispositif d'adjonction 5 coïncide avec le profil 91 du support 18 de la prise 3 ou du support de fermeture 87 selon un plan d'extension 93 de la paroi murale 9.

Cette disposition permet de limiter l'impact visuel de l'ajout d'un dispositif d'adjonction 5 à une prise de communication 3 existante.

De manière plus générale également, l'utilisation de la gaine 13 existante comprise dans la paroi murale 9 et destinée au câble téléphonique 15 présente pour avantage de ne pas nécessiter l'installation d'une gaine dédiée au câble optique 25a ou d'un support mural pour le câble optique 25a qui risquerait d'être inesthétique.

Comme il va de soi, l'invention ne se limite pas à la seule forme d'exécution de ce dispositif d'adjonction, décrit ci-dessus à titre d'exemple, elle en embrasse au contraire toutes les variantes de réalisation dans les limites de l'objet de l'invention défini par les revendications.

## Revendications

1. Dispositif d'adjonction (5) pour une prise de communication (3) ou d'alimentation, ladite prise (3) étant ménagée dans une paroi murale (9) ou une embouchure (6) destinée à être raccordée à ladite prise (3), ladite prise (3) comprenant un support (18) et un système de fixation amovible (23) du support (18) sur la paroi murale (9) ou l'embouchure (6), le dispositif d'adjonction (5) comprenant :
- un corps (29) organisé autour d'une zone de passage (30) s'étendant selon un axe de passage (31), le corps (29) présentant un contour interne (37) définissant la zone de passage (30) et un contour externe (39) définissant l'étendue spatiale du corps (29),
- une entrée d'insertion (45) pour un câble (24), tel qu'un câble de communication (25) ou un câble d'alimentation électrique,
- une sortie (46), telle qu'une sortie de communication (47) ou une sortie d'alimentation électrique, pourvue d'un élément de raccordement (51) audit câble (24), la sortie (46) étant ménagée dans ou rapportée sur le contour externe (39) du corps (29),
- un système d'assemblage (67) à la prise (3) pourvu d'un organe de fixation amovible (69) à la paroi murale (9) ou l'embouchure (6) et d'un organe de fixation amovible (75) au support (18), le dispositif d'adjonction (5) étant agencé pour être disposé, en une position assemblée du système d'assemblage (67), entre la paroi murale (9) et le support (18) ou entre l'embouchure (6) et le support (18) selon l'axe de passage (31).

2. Dispositif d'adjonction (5) selon la revendication 1, dans lequel le corps (29), en une configuration de mise en place, présente une fente de passage (79) entre le contour interne et le contour externe, ladite fente (79) étant en outre traversante selon l'axe de passage (31).

3. Dispositif d'adjonction (5) selon la revendication 2, dans lequel la fente de passage (79) est engendrée par le déplacement d'une portion (81, 85) du corps (29).

4. Dispositif d'adjonction (5) selon l'une des revendications 2 ou 3, dans lequel le corps (29) comprend plusieurs parties (41, 43), chacune étant agencée pour être disposée en une configuration de mise en place et chacune présentant une fente de passage (79).

5. Dispositif d'adjonction (5) selon l'une des revendications précédentes, dans lequel le corps (29) présente une cavité de protection (57) pour le câble (24) entre l'entrée d'insertion (45) et l'élément de raccordement (51) de la sortie (46).

6. Dispositif d'adjonction (5) selon la revendication précédente, dans lequel le corps (29) comprend une entretoise de fixation (41) sur laquelle est rapporté le système d'assemblage (67) et une enveloppe de protection (43) dans laquelle est ménagée la cavité (57).

7. Dispositif d'adjonction (5) selon la revendication précédente, dans lequel l'enveloppe de protection (43) est agencée pour être solidarisé à l'entretoise de fixation (41).

8. Dispositif d'adjonction (5) selon l'une des revendications précédentes, dans lequel l'organe de fixation amovible (69) à la paroi murale (9) ou l'embouchure (6) correspond à une première partie du système de fixation amovible (23) de la prise (3) ménagée dans le support (18) et/ou dans lequel l'organe de fixation amovible (75) au support (18) correspond à une deuxième partie du système de fixation amovible (23) de la prise (3) ménagée dans la paroi murale (9) ou l'embouchure (6).

9. Dispositif d'adjonction (5) selon l'une des revendications précédentes, dans lequel la sortie (46) est ménagée dans une portion de paroi externe du dispositif d'adjonction s'étendant sensiblement parallèlement à l'axe de passage (31).

10. Dispositif d'adjonction (5) selon l'une des revendications précédentes, dans lequel le contour externe (39) correspond à une paroi externe du dispositif d'adjonction s'étendant sensiblement parallèlement à l'axe de passage.

11. Dispositif d'adjonction (5) selon l'une des revendications précédentes, dans lequel l'organe de fixation amovible (69) à la paroi murale (9) ou l'embouchure (6) est agencé pour disposer, de manière alternative, le corps (29) en une pluralité d'orientations par rapport à la paroi murale (9) ou l'embouchure (6) en position assemblée.

12. Dispositif d'adjonction (5) selon l'une des revendications précédentes, comprenant en outre un élément de fixation additionnel agencé pour fixer le dispositif d'adjonction sur un support externe, tel qu'un mur.

13. Dispositif d'adjonction (5) selon l'une des revendications précédentes, comprenant en outre un support de fermeture (87) agencé pour être solidarisé au corps (29).

14. Prise combinée (1) comprenant un dispositif d'adjonction (5) selon l'une des revendications 1 à 12 et une prise de communication (3) ou d'alimentation, ladite prise de communication (3) étant ménagée dans une paroi murale (9) ou une embouchure (6) destinée à être raccordée à ladite prise de communication (3), ladite prise de communication (3) comprenant un support (18) et un système de fixation amovible (23) du support (18) sur la paroi murale (9) ou l'embouchure (6) ; le dispositif d'adjonction (5) étant agencé pour être disposé, en une position assemblée, entre la paroi murale (9) et le support (18) ou entre l'embouchure (6) et le support (18) de la prise (3).

15. Prise combinée (1) selon la revendication précédente, dans laquelle le support (18) et/ou l'embouchure (6) présentent un profil (91) extérieur selon le plan transversal (33) à l'axe de passage (31), le dispositif d'adjonction (5) présentant un profil (89) extérieur identique ou compris dans le profil (91) extérieur du support (18) et/ou de l'embouchure (6).

## Patentansprüche

1. Ergänzungsvorrichtung (5) für eine Kommunikations- (3) oder Versorgungsschnittstelle, wobei die besagte Schnittstelle (3) in einer Mauerwand (9) oder einer Wanddose (6) vorgesehen ist, die dazu bestimmt ist, mit der besagten Schnittstelle (3) verbunden zu werden, wobei die besagte Schnittstelle (3) einen Halter (18) und ein abnehmbares Befestigungssystem (23) des Halters (18) an der Mauerwand (9) oder der Wanddose (6) umfasst, wobei die Ergänzungsvorrichtung (5) Folgendes umfasst:
- ein Gehäuse (29), das um eine Durchgangszone (30) organisiert ist, die sich entlang einer Durchgangsachse (31) erstreckt, wobei das Gehäuse (29) eine Innenkontur (37) aufweist, welche die Durchgangszone (30) definiert, und eine Außenkontur (39), welche den räumlichen Umfang des Gehäuses (29) definiert,
- einen Einführungseinlass (45) für ein Kabel (24), wie ein Kommunikationskabel (25) oder ein Stromversorgungskabel,
- einen Auslass (46), wie einen Kommunikationsauslass (47) oder einen Stromversorgungsauslass, der mit einem Anschlusselement (51) an das besagte Kabel (24) versehen ist, wobei der Auslass (46) in der Außenkontur (39) des Gehäuses (29) vorgesehen oder darauf beigebracht ist,
- ein Montagesystem (67) an der Schnittstelle (3), das mit einem abnehmbaren Befestigungsorgan (69) an der Mauerwand (9) oder der Wanddose (6) versehen ist, und mit einem abnehmbaren Befestigungsorgan (75) am Halter (18), wobei die Ergänzungsvorrichtung (5) eingerichtet ist, um, in einer montierten Position des Montagesystems (67), zwischen der Mauerwand (9) und dem Halter (18) oder zwischen der Wanddose (6) und dem Halter (18) entlang der Durchgangsachse (31) angeordnet zu werden.

2. Ergänzungsvorrichtung (5) nach Anspruch 1, wobei das Gehäuse (29) in einer Anbringungskonfiguration einen Durchgangsspalt (79) zwischen der Innenkontur und der Außenkontur aufweist, wobei der besagte Spalt (79) darüber hinaus entlang der Durchgangsachse (31) durchgehend ist.

3. Ergänzungsvorrichtung (5) nach Anspruch 2, wobei der Durchgangsspalt (79) durch die Bewegung eines Teils (81, 85) des Gehäuses (29) gebildet wird.

4. Ergänzungsvorrichtung (5) nach einem der Ansprüche 2 oder 3, wobei das Gehäuse (29) mehrere Teile (41, 43) umfasst, wobei jeder eingerichtet ist, um in einer Anbringungskonfiguration angeordnet zu werden, und jeder einen Durchgangsspalt (79) aufweist.

5. Ergänzungsvorrichtung (5) nach einem der vorhergehenden Ansprüche, wobei das Gehäuse (29) eine Schutzvertiefung (57) für das Kabel (24) zwischen dem Einführungseinlass (45) und dem Anschlusselement (51) des Auslasses (46) aufweist.

6. Ergänzungsvorrichtung (5) nach dem vorhergehenden Anspruch, wobei das Gehäuse (29) ein Befestigungs-Zwischenstück (41) umfasst, auf dem das Montagesystem (67) beigebracht ist, und eine Schutzhülle (43), in der die Schutzvertiefung (57) vorgesehen ist.

7. Ergänzungsvorrichtung (5) nach dem vorhergehenden Anspruch, wobei die Schutzhülle (43) eingerichtet ist, um fest mit dem Befestigungs-Zwischenstück (41) verbunden zu werden.

8. Ergänzungsvorrichtung (5) nach einem der vorhergehenden Ansprüche, wobei das abnehmbare Befestigungsorgan (69) an der Mauerwand (9) oder der Wanddose (6) einem ersten Teil des abnehmbaren Befestigungssystems (23) der Schnittstelle (3) entspricht, der im Halter (18) vorgesehen ist, und/ oder wobei das abnehmbare Befestigungsorgan (75) am Halter (18) einem zweiten Teil des Befestigungssystems (23) der Schnittstelle (3) entspricht, der in der Mauerwand (9) oder der Wanddose (6) vorgesehen ist.

9. Ergänzungsvorrichtung (5) nach einem der vorhergehenden Ansprüche, wobei der Auslass (46) in einem äußeren Wandabschnitt der Ergänzungsvorrichtung vorgesehen ist, der sich im Wesentlichen parallel zur Durchgangsachse (31) erstreckt.

10. Ergänzungsvorrichtung (5) nach einem der vorhergehenden Ansprüche, wobei die Außenkontur (39) einer Außenwand der Ergänzungsvorrichtung entspricht, die sich im Wesentlichen parallel zur Durchgangsachse erstreckt.

11. Ergänzungsvorrichtung (5) nach einem der vorhergehenden Ansprüche, wobei das abnehmbare Befestigungsorgan (69) an der Mauerwand (9) oder der Wanddose (6) eingerichtet ist, um in der montierten Position das Gehäuse (29) abwechselnd in eine Vielzahl von Ausrichtungen im Verhältnis zur Mauerwand (9) oder zur Wanddose (6) anzuordnen.

12. Ergänzungsvorrichtung (5) nach einem der vorhergehenden Ansprüche, darüber hinaus ein zusätzliches Befestigungselement umfassend, das eingerichtet ist, um die Ergänzungsvorrichtung auf einem äußeren Träger, wie einer Wand zu befestigen.

13. Ergänzungsvorrichtung (5) nach einem der vorhergehenden Ansprüche, darüber hinaus einen Verschlusshalter (87) umfassend, der eingerichtet ist, um fest mit dem Gehäuse (29) verbunden zu werden.

14. Kombinierte Steckdose (1), eine Ergänzungsvorrichtung (5) nach einem der Ansprüche 1 bis 12 und eine Kommunikations- (3) oder Versorgungsschnittstelle umfassend, wobei die besagte Schnittstelle (3) in einer Mauerwand (9) oder einer Wanddose (6) vorgesehen ist, die dazu bestimmt ist, mit der besagten Schnittstelle (3) verbunden zu werden, wobei die besagte Schnittstelle (3) einen Halter (18) und ein abnehmbares Befestigungssystem (23) des Halters (18) an der Mauerwand (9) oder der Wanddose (6) umfasst; wobei die Ergänzungsvorrichtung (5) eingerichtet ist, um in einer montierten Position, zwischen der Mauerwand (9) und dem Halter (18) oder der Wanddose (6) und dem Halter (18) der Schnittstelle (3) angeordnet zu werden.

15. Kombinierte Steckdose (1) nach dem vorhergehenden Anspruch, wobei der Halter (18) und/ oder die Wanddose (6) ein Außenprofil (91) entsprechend der zur Durchgangsachse (31) quer verlaufenden Ebene (33) aufweisen, wobei die Ergänzungsvorrichtung (5) ein Außenprofil (89) aufweist, das gleich dem Außenprofil (91) des Halters (18) und/ oder der Wanddose (6) ist, oder darin enthalten ist.

## Claims

1. An addition device (5) for a communication or power socket (3), said socket (3) being formed in a wall unit (9) or a mouthpiece (6) intended to be connected to said socket (3), said socket (3) comprising a support (18) and a removable fastening system (23) of the support (18) on the wall unit (9) or the mouthpiece (6), the addition device (5) comprising:
- a body (29) arranged around a passage area (30) extending along a passage axis (31), the body (29) having an inner contour (37) defining the passage area (30) and an outer contour (39) defining the spatial extent of the body (29),
- an insertion inlet (45) for a cable (24), such as a communication cable (25) or a power supply cable,
- an output (46), such as a communication output (47) or a power supply output, provided with a connecting element (51) to said cable (24), the output (46) being formed in or attached on the outer contour (39) of the body (29),
- an assembly system (67) to the socket (3) provided with a removable fastening member (69) to the wall unit (9) or the mouthpiece (6) and with a removable fastening member (75) to the support (18), the addition device (5) being arranged to be disposed, in an assembled position of the assembly system (67), between the wall unit (9) and the support (18) or between the mouthpiece (6) and the support (18) along the passage axis (31).

2. The addition device (5) according to claim 1, wherein the body (29), in an implementing configuration, has a passage slot (79) between the inner contour and the outer contour, said slot (79) being further a through slot along the passage axis (31).

3. The addition device (5) according to claim 2, wherein the passage slot (79) is generated by the displacement of a portion (81, 85) of the body (29).

4. The addition device (5) according to any of claims 2 or 3, wherein the body (29) comprises a plurality of portions (41, 43), each being arranged to be disposed in an implementing configuration and each having a passage slot (79).

5. The addition device (5) according to any of the preceding claims, wherein the body (29) has a protective cavity (57) for the cable (24) between the insertion inlet (45) and the connecting element (51) of the output (46).

6. The addition device (5) according to the preceding claim, wherein the body (29) comprises a fastening spacer (41) on which the assembly system (67) is attached and a protective envelope (43) in which the cavity (57) is formed.

7. The addition device (5) according to the preceding claim, wherein the protective envelope (43) is arranged to be secured to the fastening spacer (41).

8. The addition device (5) according to any of the preceding claims, wherein the removable fastening member (69) to the wall unit (9) or the mouthpiece (6) corresponds to a first portion of the removable fastening system (23) of the socket (3) formed in the support (18) and/or in which the removable fastening member (75) to the support (18) corresponds to a second portion of the removable fastening system (23) of the socket (3) formed in the wall unit (9) or the mouthpiece (6).

9. The addition device (5) according to any of the preceding claims, wherein the output (46) is formed in an outer wall portion of the addition device extending substantially parallel to the passage axis (31).

10. The addition device (5) according to any of the preceding claims, wherein the outer contour (39) corresponds to an outer wall of the addition device extending substantially parallel to the passage axis.

11. The addition device (5) according to any of the preceding claims, wherein the removable fastening member (69) to the wall unit (9) or the mouthpiece (6) is arranged to alternately dispose the body (29) in a plurality of orientations relative to the wall unit (9) or the mouthpiece (6) in the assembled position.

12. The addition device (5) according to any of the preceding claims, further comprising an additional fastening element arranged to fasten the addition device on an outer support, such as a wall.

13. The addition device (5) according to any of the preceding claims, further comprising a closing support (87) arranged to be secured to the body (29).

14. A combined socket (1) comprising an addition device (5) according to any of claims 1 to 12 and a communication or power socket (3), said communication socket (3) being formed in a wall unit (9) or a mouthpiece (6) intended to be connected to said communication socket (3), said communication socket (3) comprising a support (18) and a removable fastening system (23) of the support (18) on the wall unit (9) or the mouthpiece (6); the addition device (5) being arranged to be disposed, in an assembled position, between the wall unit (9) and the support (18) or between the mouthpiece (6) and the support (18) of the socket (3).

15. The combined socket (1) according to the preceding claim, wherein the support (18) and/or the mouthpiece (6) have an outer profile (91) along the transverse plane (33) to the passage axis (31), the addition device (5) having an outer profile (89) identical to or comprised in the outer profile (91) of the support (18) and/or the mouthpiece (6).
